# EUROPÄISCHE PATENTANMELDUNG

(11) **EP 1 958 755 A1**
(43) Veröffentlichungstag der Anmeldung: **20.08.2008**
(21) Anmeldenummer: 08100930.0
(22) Anmeldetag: 25.01.2008
(51) Int. Cl.: B29C 45/73

(54) **Plattenelement**

(30) Priorität: 16.02.2007 DE 102007008297
(71) Anmelder: Demag Ergotech GmbH, 90571 Schwaig (DE)
(72) Erfinder: Wallerer, Alexander, 91080 Spardorf (DE); Grötsch, Willi, 91249 Weigendorf (DE)
(74) Vertreter: Rau, Manfred

(57) **Zusammenfassung**

Die Erfindung betrifft ein Plattenelement für die Schließeinheit einer Spritzgießmaschine mit einem Plattenkörper (10, 110, 210, 310), zumindest einer den Plattenkörper (10, 110, 210, 310) durchsetzenden Bohrung (12, 112, 212, 312) sowie zumindest einer Medienbohrung (14, 114, 214, 314, 415), welche die Bohrung (12, 112, 212, 312) schneidet und dadurch in zwei Medienbohrungsäste geteilt ist.

Um eine aufwändige Umkonstruktion des Plattenelementes bei solchen Bohrungskreuzungen zu vermeiden, wird vorgeschlagen, im Plattenkörper (10, 110, 210, 310) koaxial zu der Bohrung (12, 112, 212, 312) ein Einsatzelement (16, 116, 216, 316) vorzusehen, welches eine mit der den Plattenkörper (10, 110, 210, 310) durchsetzenden Bohrung (12, 112, 212, 312) koaxial fluchtende Bohrung (17, 117, 217, 317) und zumindest eine am Außenumfang zumindest teilweise umlaufende Ringnut (24, 124, 224, 324) aufweist, wobei die Ringnut (24, 124, 224, 324) mit den an der Bohrung (12, 112, 212, 312) endenden Medienbohrungsästen derart korreliert, dass eine Strömungsverbindung unter Umgehung der Bohrung (12, 112, 212, 312) hergestellt ist.

## Beschreibung

Die vorliegende Erfindung betrifft ein Plattenelement für die Schließeinheit einer Spritzgießmaschine gemäß dem Oberbegriff des Anspruchs 1.

Bei solchen Plattenelementen sind einerseits Medienbohrungen enthalten, die ein Kühlmedium, ein Schmiermedium etc. zu ihrem Bestimmungsort transportieren und insofern fluidabgedichtet sein müssen. Andererseits enthalten Konstruktionselemente wie Drehteller, Schiebetische oder andere Plattenelemente den Plattenkörper durchsetzende Bohrungen beispielsweise für Auswerferstangen. Die Positionierung solcher Bohrungen für Auswerferstangen hängt teilweise von den Kundenwünschen, teilweise von den herzustellenden Produkten ab. Dadurch kommt es im Konstruktionsalltag häufig vor, dass sich je nach Anforderung oder Wunsch die den Plattenkörper durchsetzende Bohrung eine Medienbohrung (beispielsweise für Kühl- oder Arbeitsmedien) schneidet. Kommt es zu einer solchen Situation, so müssen entweder die den Plattenkörper durchsetzende Bohrungen entfallen oder versetzt werden. Oder es müssen die Medienbohrungen entfallen oder versetzt werden. Dies führt teilweise zu aufwändigen Umkonstruktionen von Maschine und/oder Werkzeug.

Aufgabe der vorliegenden Erfindung ist es daher, eine Lösung anzugeben, so dass bei der Realisierung der vorliegenden Anforderungen bzw. Kundenwünsche ein Schnittpunkt einer Medienbohrung mit einer anderen den Plattenkörper durchsetzenden Bohrung keinerlei Problem bereitet und somit konstruktionsmäßig keine Rücksicht darauf genommen werden muss.

Diese Aufgabe wird durch die im Anspruch 1 genannten Merkmale gelöst.

Demgemäß ist ein Gedanke der vorliegenden Erfindung darin zu sehen, dass der Medienkanal mittels eines Einsatzelementes, welches gleichzeitig die den Plattenkörper durchsetzende Bohrung mitrealisiert, um diese Bohrung herumgeführt wird. Dazu ist das Einsatzelement koaxial in die den Plattenkörper durchsetzende Bohrung eingesetzt, wobei eine Innenbohrung des Einsatzelementes koaxial mit der den Plattenkörper durchsetzenden Bohrung fluchtet, so dass insgesamt der Plattenkörper in gewünschter Weise vollständig von einer Bohrung durchsetzt ist.

Am Außenumfang des Einsatzelementes ist eine zumindest teilweise umlaufende Ringnut vorgesehen, die mit den Enden der durch die Bohrung entstandenen Medienbohrungsäste derart korreliert, dass über diese Ringnut eine Strömungsverbindung zwischen den Medienbohrungsästen geschaffen ist. Mit anderen Worten wird dadurch eine Umleitung des Medienströmungskanals um die den Plattenkörper durchsetzende Bohrung realisiert, die durch die Ringnut einerseits und den die Ringnut abschließenden Plattenkörper andererseits gebildet ist.

Damit muss bei einer Konstruktion eines Plattenelements keinerlei Rücksicht mehr auf die Platzierung von den Plattenkörper durchsetzenden Bohrungen bzw. sich damit schneidende Medienbohrungen genommen werden. Vielmehr wird in einem solchen Schnittpunkt jeweils ein entsprechendes Einsatzelement vorgesehen.

Sollte die alleine die Passung des Einsatzelements im Plattenkörper keine ausreichende Dichtheit gewährleisten, so sollte vorzugsweise in Axialrichtung vor und nach der Ringnut eine Dichtungsanordnung, beispielsweise eine O-Ring-Dichtung, vorgesehen sein.

Das Einsatzelement ist im montierten Zustand fest im Plattenkörper verankert und kann beispielsweise mittels Schrauben gehalten werden. Alternativ ist es möglich, das Einsatzelement zumindest abschnittsweise mit einem Außengewinde und den Platten körper zumindest abschnittsweise mit einem Innengewinde zu versehen, so dass das Einsatzelement in den Plattenkörper einschraubbar ist.

Eine weitere Möglichkeit der Befestigung des Einsatzelementes in den Plattenkörper besteht mit einer Hohlschraube, die plattenkörperseitig gegenüberliegend des Einsatzelementes eingesetzt und mit dem Einsatzelement verbunden, insbesondere verschraubt ist. Auch diese Verschraubung kann mittels eines abschnittsweisen Innengewindes des Einsatzelementes und einem damit zusammenwirkenden Außengewinde des Hohlschraubenschaftes hergestellt sein. Bezüglich dieser Lösung ist anzumerken, dass die den Plattenkörper durchsetzende Bohrung zumindest teilweise durch eine Innenbohrung der Hohlschraube und eine koaxial und fluchtend dazu ausgerichtete Bohrung des Einsatzelementes definiert ist.

Alle vorgenannten Lösungsmöglichkeiten der Befestigung des Einsatzelementes in dem Plattenkörper ermöglichen ein leichtes Zusammenfügen und Montieren des Plattenelements sowie eine Austauschbarkeit und damit auch Reinigungsmöglichkeit der Medienkanäle.

Sollte gefordert sein, dass die den Plattenkörper durchsetzende Bohrung durchgängig den gleichen Durchmesser aufweist, so ist es notwendig, zumindest im Bereich des Einsatzelementes eine erweiterte Bohrung vorzusehen, in die das Einsatzelement eingesetzt ist. In einem solchen Fall kann die Bohrung trotz einer bestimmten Wanddicke des in etwa hülsenförmigen Einsatzelementes so groß dimensioniert werden, dass sie der Bohrung der den Plattenkörper durchsetzenden Bohrung entspricht.

Natürlich ist es auch möglich, dass zwei oder mehrere Medienbohrungen die den Plattenkörper durchsetzende Bohrung schneiden. In einem solchen Fall weist das Einsatzelement eine Anzahl von Ringnuten auf, die der Anzahl der Medienbohrungen entspricht, welche die den Plattenkörper durchsetzende Bohrung schneiden. Eine jede Ringnut stellt dann eine Strömungsverbindung für die einzelnen Medienbohrungsäste einer Medienbohrung her.

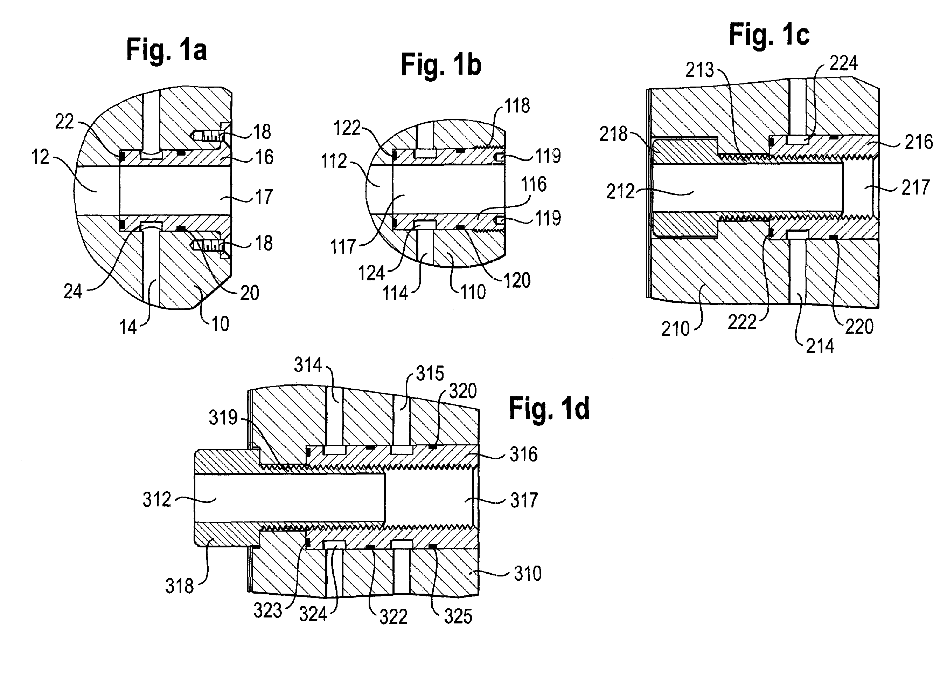

Die vorliegende Erfindung wird nachfolgend anhand verschiedener Ausführungsbeispiele und mit Bezug auf die beigefügten Zeichnungen näher erläutert. Die Zeichnungen zeigen in
- Fig. 1 a): eine Detailschnittdarstellung eines erfindungsgemäßen Plattenelements gemäß einer ersten Ausführungsform,
- Fig. 1b): eine Detailschnittansicht eines erfindungsgemäßen Plattenelements gemäß einer zweiten Ausführungsform,
- Fig. 1c): eine Detailschnittansicht eines erfindungsgemäßen Plattenelements gemäß einer dritten Ausführungsform und
- Fig.1d): eine Detailschnittansicht eines erfindungsgemäßen Plattenelements gemäß einer vierten Ausführungsform.

Bei allen nachfolgend beschriebenen Ausführungsformen ist jeweils nicht das gesamte Plattenelement, sondern nur der kritische und für die vorliegende Erfindung relevante Bereich des Schnittpunkts einer Medienbohrung mit einer den Plattenkörper durchsetzenden Bohrung dargestellt. Natürlich kann auch ein Plattenelement auch mehrere solcher Schnittpunkte aufweisen.

In Fig. 1a) ist in einem Plattenkörper 10 eine diesen Plattenkörper 10 vollständig durchsetzende Bohrung 12 für einen Auswerferstift (nicht dargestellt) angeordnet. Überdies ist in dem Plattenkörper 10 eine Medienbohrung 14 für ein Kühlmedium vorgesehen, welche die Bohrung 12 schneidet.

In erfindungsgemäßer Weise ist in eine erweiterte Bohrung des Plattenelements 10 ein Einsatzelement 16 eingesetzt, das im wesentlichen eine zylindrische Buchsenform mit einer Innenbohrung 17 aufweist. Der Durchmesser der Innenbohrung 17 entspricht dem Durchmesser der Bohrung 12. Das Einsatzelement 16 weist über den Außenumfang eine umlaufende Ringnut 24 auf, die in Axialrichtung gesehen auf Höhe der Medienbohrung angeordnet ist und mit den Enden der Medienbohrung 14 korrespondiert. In Axialrichtung vor und nach der Ringnut sind in entsprechenden Ausnehmungen des Einsatzelementes 16 zwei O-Ring-Dichtungen 20 und 22 vorgesehen, die eine Abdichtung zwischen dem Einsatzelement 16 und dem Plattenkörper sicherstellen.

Mittels einem oberen Befestigungsflansch ist das Einsatzelement 16 mittels Schrauben 18 am Plattenkörper 10 befestigt.

Mit dieser Konstruktion ist auf der einen Seite eine insgesamt den Platten körper 10 durchsetzende Bohrung mit konstantem Durchmesser, bestehend aus den Bohrungsabschnitten 12 und 17 hergestellt. Überdies wird über die Ringnut 24 eine Umleitung des Medienkanals um diese Bohrung herum erreicht. Das Medienfluid kommt aus einem Bohrungsast, umläuft die Bohrung über die Ringnut 24 und tritt in den gegenüberliegenden Bohrungsast ein.

Die Ausführungsvariante des Plattenelements in Fig. 1b) ist ähnlich der Ausführungsvariante des Plattenelements in Fig. 1a) aufgebaut. Dabei entsprechen die Bezugszeichen 10 und 110, 12 und 112, 14 und 114, 20 und 120, 22 und 122 etc. in Bezeichnung und Funktion einander. Die Ausführungsvariante in Fig. 1b) unterscheidet sich in der Weise gegenüber der Ausführungsvariante in 1a), wie das Einsatzelement 116 im Plattenkörper 110 befestigt ist. Das Einsatzelement 116 weist im oberen Bereich ein Außengewinde auf. Der Plattenkörper 110 besitzt in diesem Bereich ein Innengewinde, welches mit dem Außengewinde des Einsatzelementes zu der Gewindeverbindung 118 zusammenwirkt. Mit dieser Lösung kann das Einsatzelement 116 mittels eines Werkzeugs, welches in die Eingriffsöffnungen 119 eingreifen kann, in den Platten körper 110 eingeschraubt werden.

Eine weitere Ausführungsvariante eines Plattenelements ist in Fig. 1c) angegeben. Auch hier entsprechen die Bezugsziffern 210, 212, 214 etc. in Bezeichnung und Funktion den entsprechenden Bezugszeichen 10, 12, 14 etc. Wiederum ist gegenüber der Lösung in Fig. 1a) die Befestigung des Einsatzelements 216 unterschiedlich. Nunmehr weist das Einsatzelement 216 an seinem unteren Bereich ein Innengewinde auf. Auf der dem Einsatzelement 216 gegenüberliegenden Seite des Plattenkörpers 210 ist eine Halteschraube 218 in Form einer Hohlschraube, also mit einer Innenbohrung eingesetzt. Diese Halteschraube 218 weist an ihrem unteren Schaftelement 219 ein Außengewinde auf, welches mit dem Innengewinde des Einsatzelements 216 zusammenwirkt. Nach dem Einschrauben der Halteschraube 218 wird das Einsatzelement 216 gegen den durch den Plattenkörper 210 realisierten Vorsprung der erweiterten Bohrung beaufschlagt und damit festgesetzt.

Die gesamte, den Platten körper 210 durchsetzende Bohrung wird durch die Innenbohrung der Halteschraube 218 sowie die Innenbohrungen 217 des Einsatzelementes 216 definiert.

Die Ausführungsform in Fig. 1d) ist wie auch die Ausführungsvariante in Fig. 1c) mittels einer Halteschraube 318 befestigt. Im Unterschied zu den vorhergehenden Ausführungsbeispielen weist der Plattenkörper 310 nunmehr jedoch zwei, den Plattenkörper 310 durchsetzende Bohrung 312 kreuzende Medienbohrungen 314 und 315 auf. Aus diesem Grunde weist auch das Einsatzelement 316 zwei Ringnuten 324 und 325 auf, die im eingesetzten Zustand in Axialrichtung mit den entsprechend zugeordneten Medienbohrungen 314 und 315 fluchten und für jede Medienbohrung 314 und 315 eine Umgehung der den Plattenkörper 310 durchsetzenden Bohrung 312 realisieren. Jeder Medienkanal ist mittels der O-Ring-Dichtungen 320, 322 und 323 gegenüber der Außenumgebung sowie gegenüber der jeweils anderen Medienbohrung abgedichtet.

Die vorangegangenen Beispiele zeigen, dass mit dieser Erfindung konstruktionsmäßig keinerlei Rücksicht auf sich eventuell schneidende Medienbohrungen mit die Platte durchsetzenden Bohrungen genommen werden muss. Vielmehr werden die entsprechenden Medienströme mittels des einfachen Konstruktionselementes um die jeweilige Bohrung herumgeleitet. Dies fördert insgesamt den Standardisierungsgrad und damit auch die Kosten bei der Herstellung der entsprechenden Plattenelemente, wobei immer kreuzungsfrei Umlenkungen realisiert werden können. Auch kann die Anzahl der Medienbohrungen erhöht werden oder es können standardisierte Auswerferbohrungen vorgesehen sein.

### Bezugszeichenliste

- 10: Plattenkörper
- 12: Bohrung für Auswerferstift
- 14: Medienbohrung
- 16: Einsatzelement
- 17: Innenbohrung im Einsatzteil
- 18: Schrauben
- 20: O-Ringdichtung
- 22: O-Ringdichtung
- 24: Ringnut

- 110: Plattenkörper
- 112: Bohrung für Auswerferstift
- 114: Medienbohrung
- 116: Einsatzelement
- 117: Innenbohrung im Einsatzteil
- 118: Gewindeverbindung
- 119: Eingriffsöffnung
- 120: O-Ringdichtung
- 122: O-Ringdichtung
- 124: Ringnut

- 210: Plattenkörper
- 212: Bohrung für Auswerferstift
- 213: Schraubenschaft
- 214: Medienbohrung
- 216: Einsatzelement
- 217: Innenbohrung im Einsatzteil
- 218: Halteschraube mit Innenbohrung
- 220: O-Ringdichtung
- 222: O-Ringdichtung
- 224: Ringnut

- 310: Drehteller
- 312: Bohrung für Auswerferstift
- 314: Erste Medienbohrung
- 315: Zweite Medienbohrung
- 316: Einsatzelement
- 317: Innenbohrung im Einsatzteil
- 318: Halteschraube
- 319: Gewindeverbindung
- 320: O-Ringdichtung
- 322: O-Ringdichtung
- 323: O-Ringdichtung
- 324: Erste Ringnut
- 325: Zweite Ringnut

## Patentansprüche

1. Plattenelement für die Schließeinheit einer Spritzgießmaschine mit
- einem Plattenkörper (10, 110, 210, 310),
- zumindest einer den Plattenkörper (10, 110, 210, 310) durchsetzenden Bohrung (12, 112, 212, 312) sowie
- zumindest einer Medienbohrung (14, 114, 214, 314, 415), welche die Bohrung (12, 112, 212, 312) schneidet und **dadurch** in zwei Medienbohrungsäste geteilt ist,
**dadurch gekennzeichnet, dass**
im Plattenkörper (10, 110, 210, 310) koaxial zu der Bohrung (12, 112, 212, 312) ein Einsatzelement (16, 116, 216, 316) vorgesehen ist, welches
-- eine mit der den Plattenkörper (10, 110, 210, 310) durchsetzenden Bohrung (12, 112, 212, 312) koaxial fluchtende Bohrung (17, 117, 217, 317) und
-- zumindest eine am Außenumfang zumindest teilweise umlaufende Ringnut (24, 124, 224, 324) aufweist, wobei die Ringnut (24, 124, 224, 324) mit den an der Bohrung (12, 112, 212, 312) endenden Medienbohrungsästen derart korreliert, dass eine Strömungsverbindung unter Umgehung der Bohrung (12, 112, 212, 312) hergestellt ist.

2. Plattenelement nach Anspruch 1,
**dadurch gekennzeichnet,**
**dass** in Axialrichtung vor und nach der zumindest einen Ringnut (24, 124, 224, 324) eine Dichtungsanordnung (20, 22; 120, 122; 220, 222; 320, 322, 323), insbesondere eine O-Ringdichtung vorgesehen sind.

3. Plattenelement nach Anspruch 1 oder 2,
**dadurch gekennzeichnet,**
**dass** das Einsatzelement (16, 116, 216, 316) mittels Schrauben (18) an dem Plattenkörper (10, 110, 210, 310) befestigt ist.

4. Plattenelement nach Anspruch 1 oder 2,
**dadurch gekennzeichnet,**
**dass** das Einsatzelement (16, 116, 216, 316) zumindest Abschnittsweise ein Außengewinde und der Plattenkörper (10, 110, 210, 310) zumindest abschnittsweise ein Innengewinde aufweist, derart, dass das Einsatzelement (16, 116, 216, 316) in den Plattenkörper (10, 110, 210, 310) einschraubbar ist.

5. Plattenelement nach Anspruch 1 oder 2,
**dadurch gekennzeichnet,**
**dass** das Einsatzelement (16, 116, 216, 316) mittels einer Hohlschraube (218, 318) mit einer Innenbohrung befestigt ist, wobei die Hohlschraube (218, 318) gegenüberliegend des Einsatzelementes (16, 116, 216, 316) in den Plattenkörper (10, 110, 210, 310) eingesetzt und mit dem Einsatzelement (16, 116, 216, 316) verbunden, insbesondere verschraubt ist, so dass die Bohrung (17, 117, 217, 317) des Einsatzelementes (16, 116, 216, 316) und die Innenbohrung der Hohlschraube (218, 318) miteinander fluchten.

6. Plattenelement nach einem er vorhergehenden Ansprüche,
**dadurch gekennzeichnet, dass**
die den Plattenkörper durchsetzende Bohrung (12, 112, 212, 312) im Bereich des Einsatzelementes (16, 116, 216, 316) erweitert ist.

7. Plattenelement nach einem der vorhergehenden Ansprüche,
**dadurch gekennzeichnet,**
**dass** zwei oder mehrere Medienbohrungen (314, 315) vorgesehen sind und das Einsatzelement (316) eine Anzahl von Ringnuten (324, 325) umfasst, die der Anzahl der die durchsetzende Bohrung (312) kreuzenden Medienbohrungen (314, 315) entspricht, wobei jede Ringnut (324, 325) eine Strömungsverbindung für eine Medienbohrung (314, 315) im Bereich der den Plattenkörper durchsetzenden Bohrung (12, 112, 212, 312) herstellt.

8. Plattenelemente nach Anspruch 7,
**dadurch gekennzeichnet,**
**dass** jeweils axial vor und nach einer Ringnut eine Abdichtung zwischen dem Plattenelement und dem Einsatzelement hergestellt ist.
